# FASCICULE DE BREVET EUROPEEN

(11) **EP 2 758 293 B1**
(45) Date de publication et mention de la délivrance du brevet: **23.03.2016**
(21) Numéro de dépôt: 12773059.6
(22) Date de dépôt: 19.09.2012
(51) Int. Cl.: B60W 20/00, B60W 10/08, B60W 10/06, B60K 6/52, B60K 23/08

(54) **PROCEDE DE REPARTITION DE COUPLE D'UN VEHICULE HYBRIDE ET VEHICULE ASSOCIE**
DREHMOMENTVERTEILUNGSVERFAHREN FÜR EIN HYBRIDFAHRZEUG UND ENTSPRECHENDES FAHRZEUG
HYBRID VEHICLE TORQUE DISTRIBUTION METHOD AND ASSOCIATED VEHICLE

(30) Priorité: 22.09.2011 FR 1158442
(43) Date de publication de la demande: 30.07.2014
(73) Titulaire: Peugeot Citroën Automobiles SA, 78140 Vélizy Villacoublay (FR)
(72) Inventeur: HABBANI, Ridouane, F-92110 Clichy (FR)
(86) Numéro de dépôt international: PCT/FR2012/052088
(87) Numéro de publication internationale: WO 2013/041806

(56) Documents cités:
- EP-A2- 1 359 041
- FR-A1- 2 901 761
- FR-A1- 2 911 565
- FR-A1- 2 955 533

## Description

### DOMAINE TECHNIQUE DE L'INVENTION

L'invention concerne un procédé de répartition de couple entre le moteur thermique et la machine électrique d'un véhicule hybride ainsi que le véhicule associé. L'invention trouve une application particulièrement avantageuse pour les véhicules hybrides comportant un moteur thermique associé à un train du véhicule et une machine électrique associée à l'autre train du véhicule.

### ETAT DE LA TECHNIQUE

Le document FR 2 955 533 décrit un procédé selon le préambule de la revendication 1.

On connaît des véhicules hybrides possédant deux chaînes de traction indépendantes. Une première chaîne de traction assure la traction du train avant et une deuxième chaîne de traction assure la traction du train arrière. Par exemple, une chaîne de traction thermique comportant un moteur thermique assure la traction du train avant et une chaîne de traction électrique comportant une machine électrique assure la traction du train arrière.

Certains véhicules hybrides possèdent également un système d'amélioration de l'adhérence connu sous le terme ESP (pour "Electronic Stability Control" en anglais). Ce système classique permet de gérer les efforts de freinage en cas de freinage d'urgence, afin d'assurer le contrôle de la trajectoire du véhicule et/ou d'éviter le blocage des roues. Pour ce faire, le système ESP mesure la stabilité, le freinage et le patinage du véhicule.

Afin d'améliorer l'adhérence, les véhicules hybrides possédant deux chaînes de tractions comportent généralement une commande d'activation d'un mode 4x4 permettant de répartir le couple entre les deux chaînes de traction. Le mode 4x4 est préférentiellement activé par l'utilisateur pour améliorer l'adhérence du véhicule, notamment lors du franchissement d'une forte pente par le véhicule.

Pour les véhicules hybrides électriques possédant une chaîne de traction thermique et une chaîne de traction électrique, le mode 4x4 divise la volonté de couple induite par le conducteur, via une pédale d'accélération, entre le moteur thermique et la machine électrique du véhicule.

Lorsque les véhicules hybrides électriques mettent en oeuvre le moteur thermique, cela induit une augmentation de la consommation de carburant et des émissions de dioxydes de carbone par rapport à l'utilisation de la machine électrique seule. Le mode 4x4 mis en oeuvre par l'utilisateur augmente donc la consommation et les émissions de dioxydes de carbone afin d'améliorer l'adhérence. Cependant, l'utilisateur peut oublier de désactiver le mode 4x4 après une situation de vie de faible adhérence et ainsi augmenter la consommation de carburant du véhicule ainsi que les émissions de dioxydes de carbone.

### OBJET DE L'INVENTION

La présente invention propose de réduire la consommation et les émissions de dioxydes de carbone du véhicule induites par l'utilisation abusive du moteur thermique, notamment dans le mode 4x4. A cet effet, l'invention propose de transférer une partie du couple du moteur thermique vers la machine électrique lorsque le véhicule évolue sans perte d'adhérence sur une distance donnée.

Selon un premier aspect, l'invention concerne donc un procédé de répartition de couple entre le train avant et le train arrière d'un véhicule hybride comprenant un moteur thermique apte à assurer la traction d'un des trains du véhicule, une machine électrique apte à assurer la traction de l'autre train du véhicule et un moyen de mesure de l'adhérence du véhicule, le moyen de mesure délivrant un signal critique d'adhérence lorsque l'adhérence du véhicule passe sous un seuil critique.

Le procédé de répartition de couple est caractérisé en ce qu'il comporte l'étape d'estimer la distance parcourue par le véhicule sans activation du signal critique d'adhérence, et de transférer un couple appliqué au moteur thermique vers la machine électrique lorsque la distance est supérieure à un seuil de distance parcourue.

L'invention présente l'avantage de proposer un système de décision de transfert de couple du moteur thermique vers la machine électrique très simple à mettre en oeuvre. En effet, sans avoir recours à un algorithme complexe de décision, l'invention propose de réutiliser l'information de non déclanchement d'un système d'amélioration de l'adhérence de type ESP pour décider de la mise en oeuvre du transfert de couple.

Selon une mise en oeuvre, le véhicule comportant un système d'évaluation de la pente de franchissement du véhicule, la vitesse de transfert du couple entre le moteur thermique et la machine électrique dépend de la pente.

Selon une mise en oeuvre, la vitesse de transfert du couple entre le moteur thermique et la machine électrique dépend de la vitesse du véhicule.

Selon une mise en oeuvre, la somme des couples du moteur thermique et de la machine électrique reste constant durant le transfert du couple du moteur thermique vers la machine électrique.

Selon une mise en oeuvre, le moteur thermique est éteint lorsque le couple du moteur thermique est complètement transféré vers la machine électrique.

Selon un deuxième aspect, la présente invention vise un véhicule mettant en oeuvre le procédé de répartition de couple objet de la présente invention.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention. Elles montrent :
Figure 1 : une représentation schématique d'un véhicule hybride mettant en oeuvre l'invention ;
Figure 2: une représentation schématique des informations reçues et envoyées par un module de répartition de couple d'un véhicule hybride selon une mise en oeuvre de l'invention; et
Figure 3: une représentation graphique, en fonction du temps, des couples du moteur thermique et de la machine électrique, de la distance parcourue sans intervention de l'ESP ainsi que l'état du moteur thermique selon une mise en oeuvre de l'invention.

Les éléments identiques, similaires ou analogues, conservent les mêmes références d'une Figure à l'autre.

### DESCRIPTION D'EXEMPLES DE REALISATION DE L'INVENTION

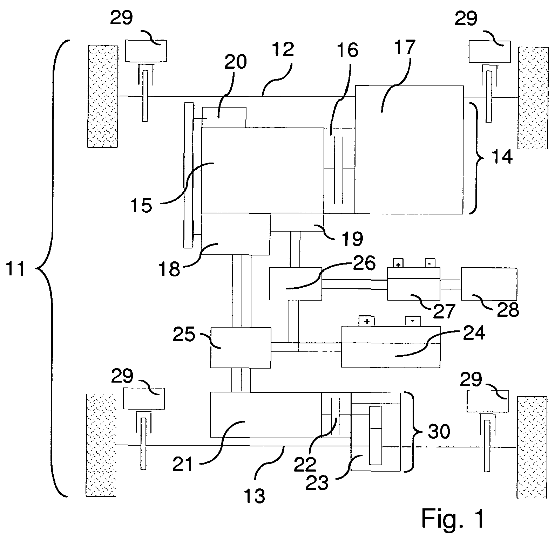

La Figure 1 montre un véhicule 11 hybride mettant en oeuvre l'invention et comportant un train avant 12 et un train arrière 13.

Une chaîne de traction 14 classique assure la traction du train avant 12. A cet effet, cette chaîne de traction 14 comporte un moteur 15 thermique en relation avec une boîte de vitesses 17 manuelle pilotée par l'intermédiaire d'un embrayage 16 classique par exemple un embrayage à garniture sec ou humide. Cette boîte de vitesses 17 est reliée au train avant 12 par l'intermédiaire d'une descente de pont (non représentée). En variante, la chaîne de traction 14 pourrait comporter une boîte de vitesses 17 automatique.

Par ailleurs, une machine électrique 18 est associée mécaniquement au moteur 15 thermique. Cette machine 18 assure la recharge d'un dispositif 24 de stockage d'énergie haute tension du véhicule 11, le démarrage du moteur 15 et s'il y a lieu la traction du train avant 12.

Un starter 19 est utilisé pour démarrer le moteur 15 en cas de températures très basses et dans le cas où la machine avant 18 n'est pas capable d'assurer cette fonction. Si besoin, un système de climatisation 20 est relié mécaniquement au moteur 15 et à la machine avant 18.

En outre, une deuxième chaîne de traction 30 est composée d'une deuxième machine électrique 21 reliée au train arrière 13 par l'intermédiaire d'un embrayage 22 et d'un ensemble 23 de démultiplication. Cet embrayage 22 prend, par exemple, la forme d'un crabot, tandis que l'ensemble 23 de démultiplication est à rapport unique, même s'il pourrait en variante présenter plusieurs rapports. Cette deuxième chaîne de traction 30 peut aider à la traction du véhicule ou recharger le dispositif 24 de stockage d'énergie haute tension.

Le dispositif 24 de stockage d'énergie haute tension est connecté à un convertisseur 26 continu/continu qui transforme la tension continue haute tension du dispositif 24 de stockage d'énergie haute tension en une tension acceptable pour le starter 19 et pour un deuxième dispositif 27 de stockage d'énergie basse tension connecté au réseau 28 de bord du véhicule 11.

Le véhicule 11 est équipé d'un système 29 de régulation de freinage classique de type ESP permettant de gérer les efforts de freinage en cas de freinage d'urgence, afin d'assurer le contrôle de la trajectoire du véhicule et/ou d'éviter le blocage des roues. Le système 29 de régulation de freinage mesure la stabilité, le freinage et le patinage du véhicule et déclenche un signal critique d'adhérence SA lorsque l'adhérence du véhicule 11 est inférieure à un seuil critique.

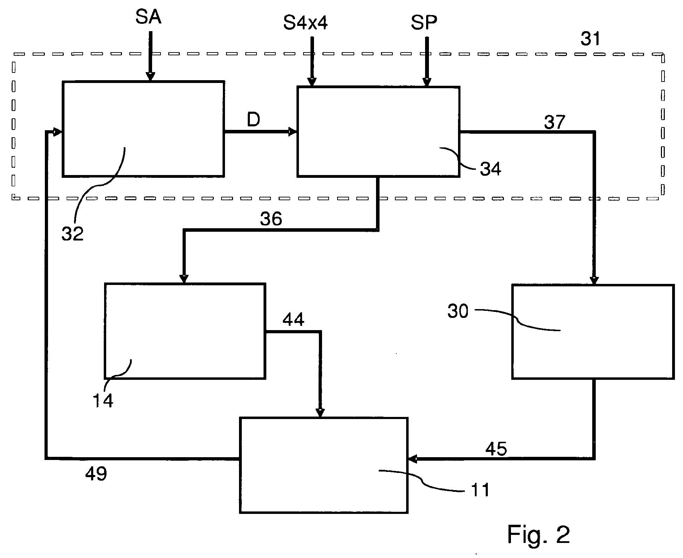

La Figure 2 montre une partie de commande 31 des couples 44, 45 de la chaîne de traction thermique 14 et de la chaîne de traction électrique 30. La partie de commande 31 embarque un module 32 d'estimation d'une distance D parcourue sans intervention du système 29 de régulation de freinage, c'est-à-dire sans déclenchement du signal critique d'adhérence SA. Le module 32 d'estimation de la distance D parcourue sans intervention du système 29 de régulation de freinage analyse la vitesse 49 du véhicule et le signal critique d'adhérence SA et délivre en continu une estimation de la distance D.

Un système 34 de répartition de couple entre le moteur thermique 15 et la machine électrique 21 génère les consignes de couple 36, 37 respectivement de la chaîne de traction thermique 14 et de la chaîne de traction électrique 30. Le système 34 analyse l'activation du mode 4x4 par l'utilisateur via le signal S4x4, la distance D et une mesure de la pente de franchissement du véhicule 11 via le signal SP. Lorsque l'utilisateur active le mode 4x4 du véhicule 11, le couple 51 est réparti par le système 34 entre la chaîne de traction thermique 14 et la chaîne de traction électrique 30. La somme des couples 44, 45 appliqués sur les deux chaînes de traction 14, 30 est égale au couple 51 induit par l'utilisateur via la pédale d'accélération.

Lorsque le système 34 détecte que la distance D est supérieure à un seuil de distance parcourue, notamment dans le mode 4x4, le système 34 transfert le couple 44 de la chaîne de traction thermique 14 vers la chaîne de traction électrique 30. Ainsi, le système 34 commande une diminution du couple 44 de la chaîne de traction thermique 14 couplé avec une augmentation du couple 45 de la chaîne de traction électrique 30. Durant l'augmentation du couple 45 et la diminution du couple 44, la somme des couples 44, 45 reste égale au couple 51 induit par l'utilisateur via la pédale d'accélération. Selon une mise en oeuvre, la vitesse d'augmentation et de diminution dépend de la pente de franchissement du véhicule donc du signal SP de mesure de cette pente. Le vitesse d'augmentation et de diminution peut également dépendre de la vitesse 49 du véhicule 11. La vitesse 49 du véhicule 11 dépend du couple 44 appliqué par la chaîne de traction thermique 14 et du couple 45 appliqué par la chaîne de traction électrique.

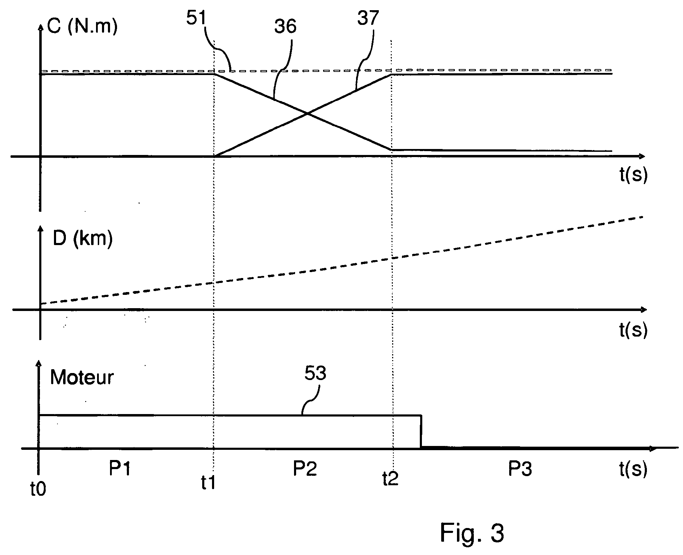

La Figure 3 montre une représentation graphique des consignes de couple 36, 37 générées par le système 34 de répartition de couple entre le moteur thermique 15 et la machine électrique 21. A l'instant initial t0, le véhicule 11 est dans un mode de propulsion thermique pour lequel la chaîne de traction électrique 30 n'est pas utilisée pour mouvoir le véhicule 11. La consigne de couple 36 de la chaîne de traction thermique 14 est égale au couple 51 induit par l'utilisateur via la pédale d'accélération. La distance D parcourue par le véhicule 11 sans activation du signal SA est représentée sur la deuxième courbe et la distance D croit pendant les trois phases P1, P2 et P3 de la Figure 3. L'état binaire du moteur thermique 15 est représenté par la courbe 53. A l'état initial t0, le moteur thermique 15 est allumé.

A l'instant t1, la distance D dépasse le seuil de distance parcourue et le système 34 transfert le couple 44 de la chaîne de traction thermique 14 vers la chaîne de traction électrique 30. La consigne de couple 36 augmente et la consigne de couple 37 diminue de sorte que la somme des couples 44, 45 soit constamment égale au couple 51 induit par l'utilisateur. La vitesse du transfert de couple entre le moteur thermique 15 et la machine électrique 21 de la phase P2 dépend préférentiellement de la vitesse 49 du véhicule 11 et/ou de la pente de franchissement du véhicule 11. A cet effet, le véhicule 11 comporte un système classique d'évaluation de l'inclinaison du véhicule 11 mesurant la pente de franchissement du véhicule 11.

A l'instant t2, le couple 44 de la chaîne de traction thermique 14 est entièrement transféré à la chaîne de traction électrique 30. Dans la phase P3, le véhicule 11 est mu uniquement par la chaîne de traction électrique 30. Le moteur 15 peut ainsi être arrêté permettant au véhicule 11 de ne plus consommer de carburant et de ne plus émettre de dioxydes de carbone. L'invention permet ainsi de réduire la consommation de carburant et les émissions de dioxydes de carbone d'un véhicule hybride, notamment dans le mode de fonctionnement 4x4.

## Revendications

1. Procédé de répartition de couple entre le train avant (12) et le train arrière (13) d'un véhicule (11) hybride comprenant :
- un moteur thermique (15) apte à assurer la traction d'un des trains (12, 13) du véhicule (11),
- une machine électrique (21) apte à assurer la traction de l'autre train (12, 13) du véhicule (11) et
- un moyen de mesure de l'adhérence du véhicule (11), le moyen de mesure délivrant un signal critique d'adhérence (SA) lorsque l'adhérence du véhicule (11) passe sous un seuil critique,
le procédé de répartition de couple comportant l'étape suivante :
- estimer la distance (D) parcourue par le véhicule (11) sans activation du signal critique d'adhérence (SA) et **caractérisé en ce que** le procédé de répartition de couple comporte aussi l'étape suivante :
- transférer un couple (44) appliqué au moteur thermique (15) vers la machine électrique (21) lorsque la distance (D) est supérieure à un seuil de distance parcourue.

2. Procédé selon la revendication 1, **caractérisé en ce que**, le véhicule (11) comportant un système d'évaluation de la pente de franchissement du véhicule, la vitesse de transfert du couple (44) entre le moteur thermique (15) et la machine électrique (21) dépend de la pente.

3. Procédé selon la revendication 1 ou 2, **caractérisé en ce que** la vitesse de transfert du couple (44) entre le moteur thermique (15) et la machine électrique (21) dépend de la vitesse (49) du véhicule (11).

4. Procédé selon l'une des revendications 1 à 3, **caractérisé en ce que** la somme des couples (44, 45) du moteur thermique (15) et de la machine électrique (21) reste constant durant le transfert du couple (44) du moteur thermique (15) vers la machine électrique (21).

5. Procédé selon l'une des revendications 1 à 4, **caractérisé en ce que** le moteur thermique (15) est éteint lorsque le couple (44) du moteur thermique (15) est complètement transféré vers la machine électrique (21).

6. Véhicule (11) mettant en oeuvre le procédé selon l'une des revendications 1 à 5.

## Patentansprüche

1. Drehmomentverteilungsverfahren zwischen der Vorderachse (12) und der Hinterachse (13) eines Hybridfahrzeugs (11), das Folgendes umfasst:
- eine Brennkraftmaschine (15), die angepasst ist, um die Traktion einer der Achsen (12, 13) des Fahrzeugs (11) sicherzustellen,
- einen Elektromotor (21), der geeignet ist, um die Traktion der anderen Achse (12, 13) des Fahrzeugs (11) sicherzustellen, und
- ein Mittel zum Messen der Haftung des Fahrzeugs (11), wobei das Messmittel ein kritisches Haftungssignal (SA) liefert, wenn die Haftung des Fahrzeugs (11) unter einen kritischen Schwellenwert fällt,
wobei das Drehmomentverteilungsverfahren die folgenden Schritte umfasst:
- Schätzen der Entfernung (D), die das Fahrzeug (11) ohne Aktivierung des kritischen Haftungssignals (SA) zurücklegt und **dadurch gekennzeichnet, dass** das Drehmomentverteilungsverfahren auch den folgenden Schritt umfasst:
- Übertragen eines Drehmoments (44), das an die Brennkraftmaschine (15) angelegt wird, zu dem Elektromotor (21), wenn die Entfernung (D) größer ist als ein Schwellenwert der zurückgelegten Entfernung.

2. Verfahren nach Anspruch 1, **dadurch gekennzeichnet, dass**, da das Fahrzeug (11) ein Beurteilungssystem des Überfahrgefälles des Fahrzeugs umfasst, die Übertragungsgeschwindigkeit des Drehmoments (44) zwischen der Brennkraftmaschine (15) und dem Elektromotor (21) von dem Gefälle abhängt.

3. Verfahren nach Anspruch 1 oder 2, **dadurch gekennzeichnet, dass** die Übertragungsgeschwindigkeit des Drehmoments (44) zwischen der Brennkraftmaschine (15) und dem Elektromotor (21) von der Geschwindigkeit (49) des Fahrzeugs (11) abhängt.

4. Verfahren nach einem der Ansprüche 1 bis 3, **dadurch gekennzeichnet, dass** die Summe der Drehmomente (44, 45) der Brennkraftmaschine (15) und des Elektromotors (21) während der Übertragung des Drehmoments (44) von der Brennkraftmaschine (15) zu dem Elektromotor (21) konstant bleibt.

5. Verfahren nach einem der Ansprüche 1 bis 4, **dadurch gekennzeichnet, dass** die Brennkraftmaschine (15) ausgeschaltet wird, wenn das Drehmoment (44) der Brennkraftmaschine (15) vollständig zu dem Elektromotor (21) übertragen wird.

6. Fahrzeug (11), das das Verfahren nach einem der Ansprüche 1 bis 5 umsetzt.

## Claims

1. A method for distributing torque between the front axle (12) and the rear axle (13) of a hybrid vehicle (11) including:
- a heat engine (15) that can drive one of the axles (12, 13) of the vehicle (11),
- an electrical machine (21) that can drive the other axle (12, 13) of the vehicle (11) and
- a means for measuring the grip of the vehicle (11), the measuring means sending a critical grip signal (SA) when the grip of the vehicle (11) falls below a critical threshold,
the method for distributing torque comprising the following step:
- estimating the distance (D) travelled by the vehicle (11) without activating the critical grip signal (SA) and **characterized in that** the method for distributing torque also comprises the following step:
- transferring a torque (44) applied to the heat engine (15) to the electric machine (21) when the distance (D) is above a distance travelled threshold.

2. The method according to Claim 1, **characterized in that**, the vehicle (11) comprising a system for evaluating the crossing gradient of the vehicle, the speed of transfer of the torque (44) between the heat engine (15) and the electric machine (21) depends on the gradient.

3. The method according to Claim 1 or 2, **characterized in that** the speed of transfer of the torque (44) between the heat engine (15) and the electric machine (21) depends on the speed (49) of the vehicle (11).

4. The method according to one of Claims 1 to 3, **characterized in that** the sum of the torques (44, 45) of the heat engine (15) and of the electric machine (21) remains constant during the transfer of the torque (44) from the heat engine (15) to the electric machine (21).

5. The method according to one of Claims 1 to 4, **characterized in that** the heat engine (15) is switched off when the torque (44) of the heat engine (15) is completely transferred to the electric machine (21).

6. A vehicle (11) implementing the method according to one of Claims 1 to 5.
